# EUROPÄISCHE PATENTSCHRIFT

(11) **EP 3 258 183 B1**
(45) Veröffentlichungstag und Bekanntmachung des Hinweises auf die Patenterteilung: **09.08.2023**
(21) Anmeldenummer: 17175406.2
(22) Anmeldetag: 12.06.2017
(51) Int. Cl.: F24F 11/30, F24F 110/00, F24F 130/40, B60H 1/00

(54) **VERFAHREN UND STEUEREINHEIT ZUR DETEKTION VON FEHLZUSTÄNDEN IN EINEM HEIZSYSTEM UND/ODER IN EINER KLIMAANLAGE SOWIE EIN HEIZSYSTEM UND/ODER EINE KLIMAANLAGE**
METHOD AND CONTROL UNIT FOR DETECTION OF FAULTS IN A HEATING SYSTEM AND/OR IN AN AIR CONDITIONING SYSTEM AND A HEATING SYSTEM AND/OR AN AIR CONDITIONING SYSTEM
PROCÉDÉ ET UNITÉ DE COMMANDE DESTINÉS À LA DÉTECTION DE DÉFAILLANCES DANS UN SYSTÈME DE CHAUFFAGE ET/OU DANS UN CLIMATISEUR ET SYSTÈME DE CHAUFFAGE ET/OU CLIMATISEUR

(30) Priorität: 13.06.2016 DE 102016210418
(43) Veröffentlichungstag der Anmeldung: 20.12.2017
(73) Patentinhaber: Robert Bosch GmbH, 70442 Stuttgart (DE)
(72) Erfinder: Erkel, Steffen, 35638 Leun (DE); Wilkening, Wolfgang, 72793 Pfullingen (DE); Scherer, Monika, 35396 Giessen (DE); Gerlach-Spiess, Sebastian, 35390 Giessen (DE)

(56) Entgegenhaltungen:
- EP-A1- 2 518 414
- CN-A- 103 527 445
- CN-A- 104 848 432
- US-A1- 2003 200 014
- US-A1- 2013 037 620
- US-A1- 2013 166 051

## Beschreibung

Die Erfindung betrifft ein Verfahren zur Detektion von Fehlzuständen in einem Heizsystem und/oder in einer Klimaanlage, insbesondere in einem HVAC System, mit einer Steuereinheit mit mindestens einem Beschleunigungssensor und/oder mindestens einem Mikrophon. Die Erfindung betrifft auch eine Steuereinheit, die zum Ausführen des erfindungsgemäßen Verfahrens ausgebildet ist sowie ein Heizsystem und/oder eine Klimaanlage mit der erfindungsgemäßen Steuereinheit.

### Stand der Technik

In handelsüblichen Heizsystemen werden zur Überwachung und Regelung des Betriebs Temperatur-, Druck- und gelegentlich Durchflusssensoren eingesetzt. Auf Basis der Sensordaten und interner Regeldaten können Fehlzustände detektiert und angezeigt werden. Allerdings ist diese Fehlererkennung begrenzt: Nicht alle Systemfehler können erkannt werden und die Bestimmung der Fehlerursache ist oft nicht eindeutig möglich. Die US 2013/166051 A1 offenbart ein Verfahren nach der Präambel des Anspruchs 1.

### Offenbarung der Erfindung

### Vorteile

Das erfindungsgemäße Verfahren nach Anspruch 1 zur Detektion von Fehlzuständen in einem Heizsystem und/oder in einer Klimaanlage, insbesondere in einem HVAC System, mit den Merkmalen des Anspruchs 1 hat den Vorteil, dass dadurch, dass:
- mindestens ein Sensorsignal durch den mindestens einen Beschleunigungssensor und/oder das mindestens eine Mikrophon ermittelt wird,
- mindestens eine Fehlergröße basierend auf dem mindestens einen Sensorsignal ermittelt wird,
- ein Fehlzustand, falls die mindestens eine Fehlergröße einen zugehörigen Fehlerschwellenwert überschreitet, festgestellt wird,
ein Fehlzustand zuverlässig und frühzeitig erkannt wird. Dabei wird die Fehlerursache eindeutig zugeordnet. Dies wird durch die Überwachung von Vibrationen und Laufgeräuschen der Komponenten des Heizsystems oder der Klimaanlage durch Beschleunigungssensoren und/oder Mikrophone ermöglicht. Dabei ist unter "Fehlzustand" ein Zustand des Heizsystems und/oder der Klimaanlage gemeint, in dem der Betrieb nicht im vorgesehen Rahmen möglich ist. Dazu gehören Defekte und Störungen sowie ein nicht optimaler Betrieb. Beispiele für Defekte und Störungen sind vollständig oder teilweise nicht funktionsfähige Pumpen und/oder Ventile, ein störendes Geräusch, beispielsweise ein Pfeifen, oder ein Wasserverlust bei einem Rohrbruch. Beispiele für einen nicht optimalen Betrieb sind eine Über- oder Unterbelastung des Heizsystems und/oder der Klimaanlage oder eine nicht optimale Verbrennung im Brennraum des Heizsystems, beispielsweise durch falsch eingestellte Betriebsparameter.

Unter "Heizsystem" ist mindestens ein Gerät zur Erzeugung von Wärmeenergie, insbesondere ein Heizgerät bzw. Heizbrenner, insbesondere zur Verwendung in einer Gebäudeheizung und/oder zur Warmwassererzeugung, bevorzugt durch das Verbrennen von einem gasförmigen oder flüssigen Brennstoff zu verstehen. Ein Heizsystem kann auch mehrere solcher Geräte sowie weitere unterstützende Vorrichtungen, wie etwa Warmwasser- oder Brennstoffspeicher, aufweisen. Unter "Klimaanlage" ist mindestens ein Gerät zur Be- und/oder Entlüftung und/oder Sicherstellung der Luftzirkulation und/oder der Luftqualität und/oder ein Gerät zur Kühlung und/oder Feuchtigkeitskontrolle in einem Gebäude zu verstehen. Ein Heizsystem kann insbesondere auch zusammen mit einer Klimaanlage eingesetzt werden. Ein System, welches ein Heizsystem und eine Klimaanlage aufweist, wird auch als "Heating-Ventilation-Air-Conditioning System" oder kurz HVAC-System bezeichnet.

Unter "Ermitteln" eines Wertes" ist das unmittelbare Messen des Wertes, etwa durch einen entsprechenden Sensor, das Empfangen und/oder Verarbeiten von Informationen, welche direkte oder indirekte Rückschlüsse auf den Wert erlauben, sowie eine Kombination aus einen Messvorgang mit dem Empfang und/oder der Verarbeitung von Informationen zu verstehen.

Durch die in den Unteransprüchen aufgeführten Merkmale sind vorteilhafte Weiterbildungen des Verfahrens nach dem Hauptanspruch möglich. Weist das Verfahren zur Detektion von Fehlzuständen einen zusätzlichen Schritt auf, in dem mindestens eine Fehlermeldung ausgegeben wird, falls ein Fehlzustand festgestellt wurde, erlaub dies, den Fehlzustand zu erkennen und gegebenfalls Gegenmaßnahmen einzuleiten. Beispielsweise kann eine Inspektion angefordert werden Dabei wird in der Erfindung mindestens ein auf der mindestens einen Fehlergröße basierendes Korrektursignal ermittelt, falls ein Fehlzustand festgestellt wurde, können automatisch Gegenmaßnahmen eingeleitet werden. Beispielsweise kann das Heizsystem und/oder die Klimaanlage heruntergefahren werden, um größere Schäden zu vermeiden.

Dabei ist unter "Korrektursignal" mindestens ein Signal zum Ansteuern und/oder Einstellen des Betriebes von mindestens einer Komponente des Heizsystems und/oder der Klimaanlage zu verstehen. Beispielsweise kann das Korrektursignal ein Steuersignal an einen Lüfter sein, welches die Lüfterdrehzahl verändert.

In der Erfindung werden in einem zusätzlichen Schritt Betriebsparameter, basierend auf der mindestens einen Fehlergröße, in der Steuereinheit in einem Speicher abgespeichert, dies erlaubt die gezielte Regelung des Heizsystems und/oder der Klimaanlage um dem Fehlzustand entgegenzuwirken. Insbesondere bei einer wiederholten, bevorzugt periodischen Ausführung des erfindungsgemäßen Verfahrens erlaubt das die iterative Behebung eines Fehlzustandes. Auf diese Weise kann der Betrieb des Heizsystems und/oder der Klimaanlage in einer Regelschleife optimiert werden. Damit wird ein optimaler Betrieb auch unter veränderlichen inneren und äußeren Bedingungen gewährleistet, insbesondere bei Verschleißprozessen und wechselnden Umweltbedingungen.

Unter "Betriebsparameter" sind dabei Parameter zu verstehen, die von der Steuerung des Heizsystems und/oder der Klimaanlage zum Regeln und Überwachen von im Heizsystem und/oder in der Klimaanlage ablaufenden Prozessen verwendet werden. Beispiele für Betriebsparameter sind die Gebläsedrehzahl bzw. die Gebläsedrehzahlkennlinie oder eine Flammenionisationskennlinie.

Wird die mindestens eine Fehlergröße von einem Maß für die Abweichung von dem mindestens einen Sensorsignal von einer zugehörigen Sollsignalvorgabe abgeleitet, erlaubt dies, das Verfahren auf bestimmte, den Fehlzustand auslösende Ereignisse einzustellen. So können beispielsweise in Simulationen oder Tests ermittelte, typische Signalverhalten bei Fehlern und/oder im optimalen Betrieb definiert werden. Diese typischen Signalverhalten können zur Detektion von Fehlzuständen eingesetzt werden. Ein Beispiel dafür ist eine Schwelle für ein Mikrophonsignal und seine zeitliche Entwicklung um sicherzustellen, dass die Geräuschbelastung nicht zu groß ist bzw. wird. Ein anderes Beispiel ist eine Frequenzanalyse von einem an einer Pumpe angebrachten Beschleunigungssensor um festzustellen, ob die Pumpe gleichmäßig und/oder im richtigen Drehsinn und/oder zu den richtigen Zeiten läuft.

Die Verwendung einer Steuereinheit für ein Heizsystem und/oder eine Klimaanlage, die dafür eingerichtet ist das erfindungsgemäße Verfahren auszuführen, hat den Vorteil, dass auf diese Weise neben Defekten und Störungen auch ein nicht optimaler Betrieb des Heizsystems und oder der Klimaanlage erkennbar ist. Auf diese Weise wird die Effizienz und Haltbarkeit des Heizsystems und/oder der Klimaanlage gewährleistet.

Ist die Steuereinheit oder sind Teile davon mobil ausgestaltet, kann das Verfahren zur Detektion von Fehlzuständen in unterschiedlichen Heizsystemen und/oder Klimaanlagen eingesetzt werden. Beispielsweise können die mobile Steuereinheit bzw. die mobilen Teile der Steuereinheit eine kompakte Funktionseinheit zur Detektion von Fehlzuständen bilden, welche einfach und problemlos bei Inspektionen von Heizsystem und/oder Klimaanlagen einsetzbar ist. Zusätzlich ist auf diese Weise die Verwendung der mobilen Steuereinheit bzw. von ihren mobilen Teilen zur Detektion von Fehlzuständen bei separaten, räumlich getrennten Komponenten eines Heizsystems und/oder einer Klimaanlage möglich. Weiterhin sind so die empfindlichen Teile der Steuereinheit von den in einem Heizsystem auftretenden thermischen und mechanischen Belastungen geschützt.

Weist die Steuereinheit mindestens eine Kommunikationsverbindung, bevorzugt eine drahtlose Kommunikationsverbindung, zwischen den Teilen der Steuereinheit, bevorzugt zwischen den mobilen und nicht mobilen Teilen der Steuereinheit, auf, erlaubt das einen besonders einfachen und sicheren Ablauf des Verfahrens zur Detektion von Fehlzuständen. Die Betriebssicherheit ist erhöht, da Fehler durch eine falsche oder fehlende Kommunikationsverbindung vermieden werden. Besonders vorteilhaft ist das, wenn das mindestens eine Sensorsignal von im Heizsystem und/oder in der Klimaanlage fest verbauten Sensoren stammt, zu denen eine Kommunikationsverbindung mit der mobilen Steuereinheit hergestellt werden muss.

Ein Heizsystem und/oder eine Klimaanlage mit einer erfindungsgemäßen Steuereinheit hat bzw. haben den Vorteil, dass Störungen in unterschiedlichen Betriebszuständen des Heizsystems und/oder der Klimaanlage erkannt werden. Das ist im Stand der Technik im Rahmen einer Inspektion nicht immer möglich, beispielsweise wenn Störungen nur unter bestimmten Betriebszuständen auftreten, die in der Regel während einer Inspektion aus Zeitgründen nicht untersucht werden, oder unter bestimmten äußeren Bedingungen auftreten, die während der Inspektion nicht gegeben sind.

Weist das erfindungsgemäße Heizsystem und/oder die erfindungsgemäße Klimaanlage eine für die Steuereinheit oder für Teile der Steuereinheit vorgesehene Aufnahme auf, ermöglicht das einen besonders problemlosen Einsatz einer mobilen Steuereinheit bzw. von den mobilen Teilen einer Steuereinheit, etwa im Rahmen einer Inspektion. Zusätzlich ist so eine einfache Aufrüstung bzw. Erweiterung des Heizsystems und/oder der Klimaanlage durch das Nachrüsten mit der Steuereinheit bzw. Teilen der Steuereinheit möglich.

Weist das Heizsystem und/oder die Klimaanlage mindestens eine Pumpe, ein Gebläse, eine Heizzelle, ein Gehäuse, ein Ventil, eine Leitung oder eine Steuereinheit auf und weist mindestens eine dieser Komponenten mindestens einen Beschleunigungssensor und/ oder ein Mikrophon auf, so hat das den Vorteil, dass die mindestens einen Beschleunigungssensor und/oder ein Mikrophon aufweisende Komponente besonders zuverlässig überwacht wird. Bei einem auftretenden Fehlzustand ist das Sensorsignal eindeutig der Komponente zugeordnet. Das ermöglicht eine besonders zielgerichtete und eindeutige Auswertung des Fehlzustandes.

Ein Computerprogramm, umfassend Befehle, die bei der Ausführung des Programms durch einen Computer, insbesondere durch eine mobile Recheneinheit, diesen veranlassen, die Steueuereinheit gemäß der Erfindung zu veranlassen, das Verfahren gemäß der vorliegenden Erfindung auszuführen, hat den Vorteil, dass das Verfahren teilweise insbesondere auf dezentralen Rechner durchgeführt werden kann, beispielsweise auf einer Cloud oder auf einem Smartphone.

Es ist von Vorteil, wenn das Computerprogramm gemäß der vorliegenden Erfindung auf einem computerlesbaren Datenträger gespeichert ist.

### Zeichnungen

In den Zeichnungen sind Ausführungsbeispiele des erfindungsgemäßen Verfahrens zur Detektion von Fehlzuständen in einem Heizsystem und/oder in einer Klimaanlage, der erfindungsgemäßen Steuereinheit und des erfindungsgemäßen Heizsystems dargestellt und in der nachfolgenden Beschreibung näher erläutert. Es zeigen
Figur 1 das erfindungsgemäße Verfahren zur Detektion von Fehlzuständen in einem Heizsystem und/oder in einer Klimaanlage,
Figur 2 eine Variante des erfindungsgemäßen Verfahrens,
Figuren 3 und 4 schematische Schaubilder von Sensorsignalen von Beschleunigungssensoren,
Figur 5 eine schematische Darstellung der erfindungsgemäßen Steuereinheit in einem erfindungsgemäßen Heizsystem,
Figuren 6 und 7 schematische Darstellungen von Varianten der erfindungsgemäßen Steuereinheit in einem erfindungsgemäßen Heizsystem und
Figur 8 eine Darstellung einer Variante des erfindungsgemäßen Heizsystems.

### Beschreibung

In den verschiedenen Ausführungsvarianten erhalten gleiche Teile bzw. Schritte die gleichen Bezugszahlen.

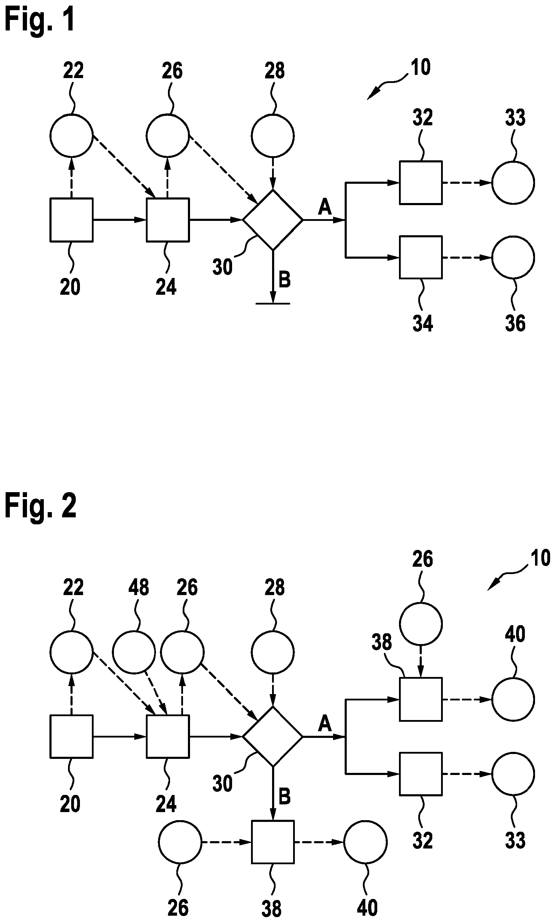

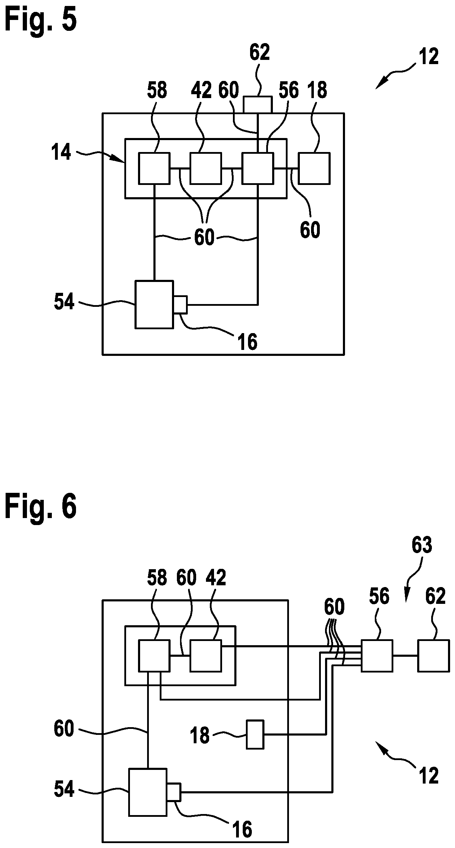

In Figur 1 ist das erfindungsgemäße Verfahren 10 zur Detektion von Fehlzuständen in einem Heizsystem 12 (siehe Figur 5) und/oder einer Klimaanlage mit einer Steuereinheit 14 mit einem Beschleunigungssensor 16 und einem Mikrophon 18 dargestellt. Im Ausführungsbeispiel wird in einem Schritt 20 jeweils ein Sensorsignal 22 von dem Beschleunigungssensor 16 und dem Mikrophon 18 empfangen und in einem Schritt 24 wird durch die Steuereinheit 14 abhängig vom Sensorsignal 22 eine Fehlergröße 26 ermittelt. Die Fehlergröße 26 wird mit einer Fehlerfunktion bestimmt, welche dem Sensorsignal 22 eine Fehlergröße 26 zuordnet. Dabei ist die dem Sensorsignal 22 des Mikrophons 18 zugeordnete Fehlergröße 26 proportional zu dem über eine definierte Messperiode auftretenden maximalen Schallpegel. Die dem Sensorsignal 22 des Beschleunigungssensors 16 zugeordnete Fehlergröße 26 ist proportional zu dem über die Messperiode gemittelten quadratischen Beschleunigungswert. Überschreitet die Fehlergröße 26 einen Fehlerschwellenwert 28, wird in einem Schritt 30 ein Fehlzustand festgestellt. Der Fehlerschwellenwert 28 wird empirisch ermittelt und ist in einem Speicher 42 abgelegt.

Wird in Schritt 30 ein Fehlzustand festgestellt, so wird das Verfahren 10 über den Pfad A fortgesetzt (siehe Figur 1). Wird kein Fehlzustand festgestellt, wird das Verfahren 10 über den Pfad B beendet. Wird das Verfahren 10 über den Pfad A fortgesetzt, so werden die Schritte 32 und 34 ausgeführt. In Schritt 32 wird eine Fehlermeldung 33 auf einer Anzeigeeinheit 62 ausgegeben. Im Ausführungsbeispiel wird im Rahmen der Fehlermeldung 33 neben der Fehlergröße 26, dem die Fehlergröße 26 ermittelnden Sensor und dem Fehlerzeitpunkt auch die Kontaktinformationen zu einem für die Fehlerbehebung autorisierten Servicepartner angezeigt.

In Schritt 34 wird durch die Steuereinheit 14 ein Korrektursignal 36 an das Heizsystem 12 gesendet. Der Schritt 34 wird ausgeführt, falls die dem Beschleunigungssensor 16 zugeordnete Fehlergröße 26 den zugehörigen Fehlerschwellenwert 28 übersteigt. Im Ausführungsbeispiel ist das Korrektursignal 36 ein Shutdown Signal an alle Komponenten des Heizsystems 12. Das Heizsystem 12 wird heruntergefahren, um Schäden durch die auftretenden, zu starken Beschleunigungen zu verhindern.

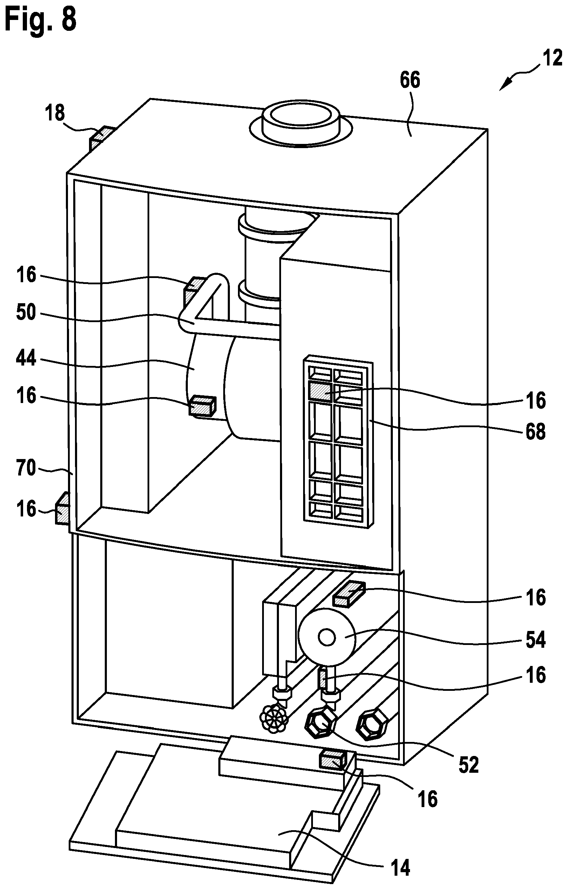

Figur 2 zeigt eine alternative Ausführungsform des Verfahrens 10. Hier wird nach dem Schritt 30 ein Schritt 38 ausgeführt. In diesem Schritt 38 werden basierend auf der Fehlergröße 26 Betriebsparameter 40 in einem Speicher 42 der Steuereinheit 14 gespeichert. In dieser Ausführungsform wird ein Gebläse 44 (siehe Figur 8) mit einem Mikrophon 18 abgehört. Das Frequenzenspektrum des Sensorsignals 22 des Mikrophons 18 wird in Schritt 24 durch die Steuereinheit 14 mit einer Fourier-Analyse untersucht. Auf diese Weise lässt sich feststellen, ob das Gebläse 44 im richtigen Drehzahlbereich läuft. Es können auch mögliche Lagerschäden oder Unwuchten detektiert werden. Das Maß für eine Fehlergröße 26 wird über die Abweichung des Frequenzspektrums des Sensorsignals 22 des Mikrophons 18 von dem Frequenzspektrum einer Sollsignalvorgabe 48 definiert, wobei unerwünschte Resonanzfrequenzen des Heizsystems 12 besonders stark gewichtet sind. Der Fehlerschwellenwert 28 für das dem Gebläse 44 zugeordnete Sensorsignal 22 beschreibt einen noch hinreichend guten Betrieb des Gebläses 44 und hängt vom Betriebsmodus des Heizsystems 12 ab, zum Beispiel von der angeforderten Leistung.

Wird in Schritt 30 (in Figur 2) kein Fehlzustand festgestellt, wird das Verfahren 10 über den Pfad B fortgesetzt. In diesem Fall wird Schritt 38 ausgeführt. Hier werden von der Fehlergröße 26 abhängige Betriebsparameter 40 in der Steuereinheit 14 gespeichert. In dieser Ausführungsform beschreiben die Betriebsparameter 40 die Gebläsedrehzahlkennlinie. Die Gebläsedrehzahlkennline beschreibt den Zusammenhang zwischen der benötigten Gebläsedrehzahl und der dafür nötigen Ansteuerspannung. Auf Basis dieser Betriebsparameter 40 wird das Gebläse 44 so angesteuert, dass die Gebläsedrehzahl, falls notwendig, zu einer optimalen Gebläsedrehzahl hin geändert wird. Das wiederholte Ausführen des Verfahrens 10 stellt eine Regelschleife dar.

Wird in Schritt 30 (in Figur 2) ein Fehlzustand festgestellt, wird das Verfahren 10 über den Pfad A fortgesetzt. In diesem Fall werden die Schritte 38 und 32 ausgeführt. Hier wird durch die Ausgabe einer Fehlermeldung 33 eine Inspektion angefordert.

In alternativen, nicht gezeigten Verfahren 10 werden in Schritt 24 mehr als ein Sensorsignal 22 zu einer Fehlergröße 26 kombiniert. Beispielsweise können an einem Bauteil mehrere Beschleunigungssensoren 16 und/oder Mikrophone 18 angebracht sein. In anderen Ausführungen können Beschleunigungssensoren 16 und/oder Mikrophone 18 verschiedenen Komponenten eines HVAC Systems 12 zugeordnet sein und zu einer Fehlergröße 26 kombiniert werden. Auf diese Weise kann beispielsweise eine Gesamtgeräuschbelastung bewertet werden oder Fehlzustände erkannt werden, bei welchem mehr als eine Komponente beteiligt ist. Beispielsweise kann ein unruhiges, hakeliges Schaltverhalten eines Ventils 52 (siehe Figur 8) an unerwünschten Vibrationen einer Leitung 50 (siehe Figur 8) erkannt werden.

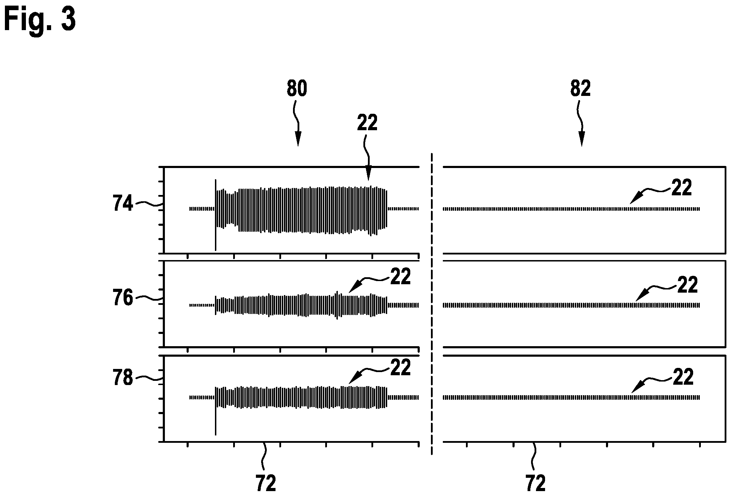

In besonderen Varianten des Verfahrens 10 wird in Schritt 24 eine Fehlergröße 26 ermittelt, welche umgekehrt proportional zu dem Sensorsignal 22 ist. So wird ein Fehlzustand festgestellt, wenn mit dem Sensorsignal 22 zu niedrige Beschleunigungen und/oder Schallpegel erkannt werden. So lässt sich feststellen, ob bestimmte Bauteile und/oder Komponenten ordnungsgemäß funktionieren. Beispielsweise können zu niedrige Beschleunigungswerte an einer Pumpe 54 auf einen Defekt der Pumpe 54 hindeuten. Figur 3 zeigt schematisch einen Zeitverlauf des Sensorsignals 22 eines Beschleunigungssensors 16 an der Pumpe 54. Auf den Abszissenachsen 72 ist jeweils eine Zeit dargestellt. Auf den Ordinatenachsen 74, 76 und 78 sind jeweils die um Null schwankende x-, y- und z-Komponente des Sensorsignals 22 bezüglich eines kartesischen Koordinatensystems abgebildet. Im Zustand 80 ist das Sensorsignal 22 des Beschleunigungssensors 16 in normalen Betriebszustand der Pumpe 54 dargestellt. Zustand 82 veranschaulicht das Sensorsignal 22 bei einer defekten Pumpe 54. In diesem Fall weisen sämtliche Komponenten des Sensorsignals 22 im Vergleich zum Zustand 80 deutlich niedrigere Maximalwerte und Durchschnittswerte auf. Dabei ist an dieser Stelle unter "Durchschnittswert" ein über eine Zeit gemittelter Betrag des Sensorsignals 22 zu verstehen.

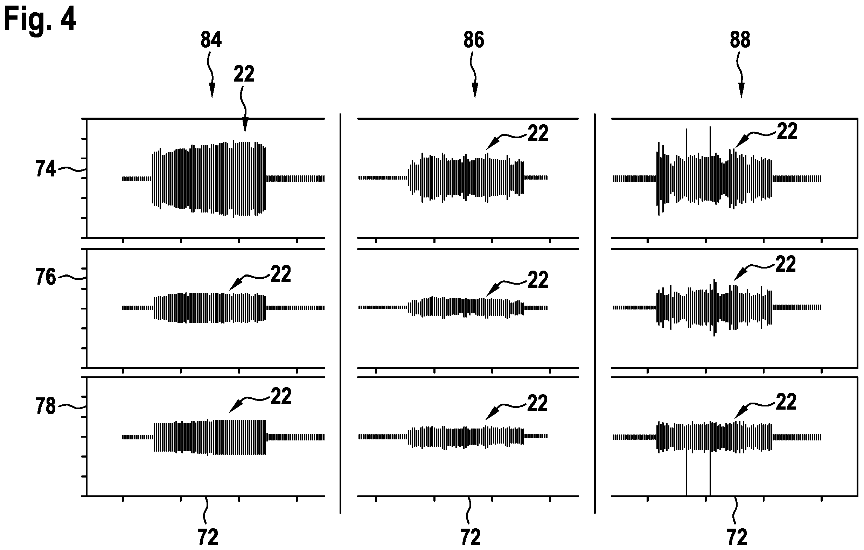

Ein anderes Beispiel ist die Verwendung von mindestens einem Beschleunigungssensor 16 an Leitungen 50 für Wasser, wo sinkende Beschleunigungswerte und/oder niedrige Beschleunigungswerte in Kombination mit anderen Sensorsignalen 22 einen Wasserverlust beschreiben. Figur 4 zeigt den schematischen Zeitverlauf des Sensorsignals 22 eines Beschleunigungssensors 16 an der Leitung 50 für Wasser. Auf den Abszissenachsen 72 ist jeweils eine Zeit dargestellt. Auf den Ordinatenachsen 74, 76 und 78 sind jeweils die x-, y- und z-Komponente des Sensorsignals 22 bezüglich eines kartesischen Koordinatensystems abgebildet. Im Zustand 84 ist das Sensorsignal 22 des Beschleunigungssensors 16 in normalen Betriebszustand dargestellt. Zustand 86 veranschaulicht den Verlauf des Sensorsignals 22 bei einem beginnenden Wasserverlust. In diesem Fall weisen sämtliche Komponenten des Sensorsignals 22 im Vergleich zum Zustand 80 niedrigere Maximalwerte und Durchschnittswerte auf. Im Zustand 88 sind die Sensorsignale 22 bei einem kritischen Wasserverlust abgebildet. In diesem Zustand 88 weisen alle Komponenten des Sensorsignals 22 starke Schwankungen auf.

In anderen Varianten wird in Schritt 24 die Fehlergröße 26 aus einer Fehlerfunktion ermittelt, welche von mindestens einem Sensorsignal 22 abhängt. Die Wahl der Fehlerfunktion richtet sich nach den technischen und physikalischen Eigenschaften des Heizsystems 12 und/oder der Klimaanlage bzw. der im Heizsystem 12 und/oder in der Klimaanlage ablaufenden Prozesse, insbesondere bei Fehlzuständen. Beispielsweise kann die einem Mikrophonsignal zugeordnete Fehlerfunktion logarithmisch sein, um den menschlichen Lautstärkeeindruck zu berücksichtigen. Bevorzugt ist die Fehlerfunktion mit mindestens einem Sensorsignal 22 streng monoton steigen oder fallend.

In weiteren Varianten wird in Schritt 24 die Fehlergröße 26 aus einer Abweichung des Sensorsignals 22 von einer Sollsignalvorgabe 48 abgeleitet. Dabei kann das Signal im Zeitbereich oder, wie im in Figur 2 abgebildeten Verfahren 10, im Frequenzbereich verglichen werden. Dabei können auch Mittelwerte über einen Zeit- und/oder Frequenzbereich verwendet werden. Die Sollsignalvorgabe 48 kann beispielsweise experimentell für verschiedene Betriebszustände des Heizsystems 12 ermittelt werden.

In weiteren Varianten werden die Betriebsparameter 40 in Schritt 38 in abhängig von mindestens einer Fehlergröße 26 sowie abhängig von weiteren Sensorsignalen 22 und den alten Betriebsparametern ermittelt. Dabei sind unter "alte Betriebsparameter" die vor der Durchführung des Verfahrens 10 verwendeten Betriebsparameter zu verstehen. Auf diese Weise wird bei der Wahl der neuen Betriebsparameter 40 der Betriebszustand des Heizsystems 12 und/oder der Klimaanlage berücksichtigt.

Figur 5 zeigt das Ausführungsbeispiel der Steuereinheit 14 im Heizsystem 12. Die Steuereinheit 14 weist einen Speicher 42, eine Korrektureinheit 56, eine Regeleinheit 58 sowie einen Beschleunigungssensor 16 und ein Mikrophon 18 auf. Durch den Beschleunigungssensor 16 und das Mikrophon 18 sind in Schritt 20 Sensorsignale 22 ermittelbar. Die Sensorsignale 22 sind über eine Kommunikationsverbindung 60 an die Korrektureinheit 56 übermittelbar. Die Korrektureinheit 56 ist so eingerichtet, dass aus den Sensorsignalen 22 die Fehlergröße 26 ermittelbar ist. Weiterhin ist die Korrektureinheit 56 so eingerichtet, dass der Schritt 30 ausführbar ist, so dass ein Fehlzustand feststellbar ist. Weiterhin sind mit der Korrektureinheit 56 die Betriebsparameter 40 ermittelbar, abhängig von mindestens einer Fehlergröße 26.

Die Korrektureinheit 56 weist eine Kommunikationsverbindung 60 zu einer Anzeigeeinheit 62 auf, auf der eine Fehlermeldung 33 anzeigbar ist. Im Ausführungsbeispiel ist das ein TFT Display mit einer dazugehörigen Steuerung, durch welche das Fehleranzeigesignal der Korrektureinheit 56 in eine von einem Benutzer ablesbare Displayanzeige umsetzbar ist.

Die Korrektureinheit 56 weist eine Kommunikationsverbindung 60 zum Speicher 42 auf, so dass die Betriebsparameter 40 abspeicherbar sind.

Die Regeleinheit 58 ist so eingerichtet, dass Komponenten des Heizsystems 12 ansteuerbar sind. Dazu weist die Regeleinheit 58 eine Kommunikationsverbindung 60 zu einer Pumpe 54 auf. Im Ausführungsbeispiel ist so der Umlaufsinn und die Leistung der Pumpe 54 durch das Versenden von Steuersignalen durch die Regeleinheit 58 einstellbar.

Der Beschleunigungssensor 16 ist an die Pumpe 54 angeklebt. Der dazu eingesetzte Kleber überträgt Vibrationen.

Figur 6 zeigt eine Variante der Steuereinheit 14 im Heizsystem 12. Hier sind die Korrektureinheit 56 und die Anzeigeeinheit 62 mobil ausgeführt. Beide Elemente der Steuereinheit 14 sind in einem tragbaren Diagnosegerät 63 integriert, welches für Diagnosezwecke einsetzbar ist. Die Kommunikationsverbindungen 60 zwischen der Korrektureinheit 56 und den nicht mobilen Teilen der Steuereinheit 14 sind drahtlose Funkverbindungen, in dieser Ausführungsform sind das Verbindungen über Zigbee. In alternativen Ausführungsformen wird WLAN, Bluetooth oder Zwave eingesetzt. Weiterhin weist die Korrektureinheit 56 eine Kommunikationsverbindung 60 zu der Regeleinheit 58 auf. Auf diese Weise ist der Schritt 34 ausführbar.

In besonderen Ausführungen sind auch mindestens ein Beschleunigungssensor 16 und/oder mindestens ein Mikrophon 18 mobil ausgeführt. Diese können in einem Gerät mit dem mobilen Teil der Steuereinheit 14 oder separat davon vorliegen. Zur Durchführung einer Diagnose sind dann mindestens ein Beschleunigungssensor 16 und/oder mindestens ein Mikrophon 18 im Heizsystem 12 anbringbar ausgestaltet. So können diese an dafür vorgesehene Komponenten angebracht werden, bevorzugt reversibel, beispielsweise durch Anclipsen oder Anschrauben.

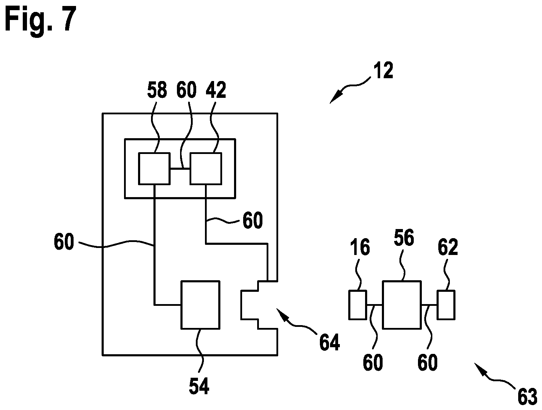

In anderen Varianten sind mindestens ein Beschleunigungssensor 16 und/oder ein Mikrophon 18 fest in einem tragbaren Diagnosegerät 63 zusammen mit den mobilen Teilen der Steuereinheit 14 eingebaut. Das ist besonders vorteilhaft, wenn das Heizsystem 12 und/oder die Klimaanlage eine für das Diagnosegerät 63 passende Aufnahme 64 aufweist bzw. aufweisen. In Figur 7 zeigt eine Variante des Heizsystems 12 mit einer solchen Aufnahme 64. Die Position der Aufnahme 64 ist dabei so gewählt, dass der mobile Beschleunigungssensor 16 durch das Anbringen des mobilen Diagnosegeräts 63 in die Aufnahme 64 an der Pumpe 54 anbringbar ist. Die Aufnahme 64 weist auch eine Schnittstelle auf, die die Kommunikationsverbindung 60 zwischen der mobilen Korrektureinheit 56 und der nicht mobilen Regeleinheit 58 ermöglicht.

In alternativen Ausführungen können die Korrektureinheit 56 und/oder die Regeleinheit 58 und/oder der Speicher 42 teilweise oder ganz in der Form von Software vorliegen, die auf internen oder externen Geräten, insbesondere auf mobilen Recheneinheiten, beispielsweise Smartphones und Tablets, oder Servern, insbesondere einer Cloud, ausgeführt wird. Die Kommunikationsverbindungen 60 sind dann entsprechende Softwareschnittstellen. Insbesondere ist es denkbar, dass die Steuereinheit 14 bzw. Teile der Steuereinheit 14 von einer mobilen Recheneinheit, insbesondere einem Smartphone oder Tablet bereitgestellt werden.

In besonderen Ausführungsformen weist das tragbare Diagnosegerät 63 mindestens einen Beschleunigungssensor 16 und/oder ein Mikrophon 18 sowie einen Anschluss für eine mobile Recheneinheit, insbesondere ein Smartphone oder Tablet. Der Anschluss ist für eine Kommunikationsverbindung 60 zur mobilen Recheneinheit vorgesehen. Die Kommunikationsverbindung 60 zwischen der mobilen Recheneinheit und dem tragbaren Diagnosegerät kann eine Kabelverbindung oder eine drahtlose Verbindung sein, insbesondere Bluetooth oder WLAN. Es ist auch denkbar, dass die mobile Recheneinheit in das tragbare Diagnosegerät 63 einlegbar bzw. mit diesem Verbindbar ist, beispielsweise durch eine dafür vorgesehene Halterung am Diagnosegerät 63. Die mobile Recheneinheit empfängt Daten vom mindestens einen Beschleunigungssensor 16 und/oder Mikrophon 18. Die mobile Recheneinheit stellt die übrigen mobilen Teile der Steuereinheit 14 bereit, insbesondere die Korrektureinheit 56 und/oder die Regeleinheit 58 und/oder den Speicher 42, insbesondere ganz oder teilweise in der Form von Software. Insbesondere kann die mobile Recheneinheit eine Anzeigeeinheit 62 und/oder eine Eingabeeinheit für Nutzereingaben bereitstellen, beispielsweise einen Touchscreen.

In besonderen Ausführungen wird mindestens ein Beschleunigungssensor 16 und/oder Mikrophon 18 einer mobilen Recheneinheit, insbesondere eines Smartphones oder Tablets, für das Verfahren 10 eingesetzt. Die mobile Recheneinheit weist die mobilen Teile der Steuereinheit 14 auf. Insbesondere weist die mobile Recheneinheit die den mindestens einen Beschleunigungssensor 16 und/oder Mikrophon 18 auf, die übrigen mobilen Teile der Steuereinheit können vollständig oder teilweise in der Form von Software vorliegen. Insbesondere ist es denkbar, dass die Aufnahme 64 zum Aufnehmen der mobilen Recheneinheit eingerichtet ist.

In Figur 8 ist ein Heizgerät 66 als Realisierung eines Heizsystems 12 dargestellt. Hier ist an der Pumpe 54, am Gebläse 44, an einer Heizzelle 68, am Gehäuse 70, an einer Leitung 50, an einem Ventil 52 und an der Steuereinheit 14 jeweils ein Beschleunigungssensor 16 angebracht. Weiterhin weist die Außenseite des Gehäuses 70 ein Mikrophon 18 auf. Damit kann die Gesamtlärmbelastung analysiert werden.

## Patentansprüche

1. Verfahren (10) zur Detektion von Fehlzuständen in einem Heizsystem (12) und/oder in einer Klimaanlage, insbesondere in einem HVAC System, mit einer Steuereinheit (14) mit mindestens einem Beschleunigungssensor (16) und/oder mindestens einem Mikrophon (18), welches die folgenden Schritte umfasst:
• Ermitteln von mindestens einem Sensorsignal (22) durch den mindestens einen Beschleunigungssensor (16) und/oder durch das mindestens eine Mikrophon (18),
• Ermitteln mindestens einer Fehlergröße (26) basierend auf dem mindestens einen Sensorsignal (22),
• Feststellung eines Fehlzustandes, falls die mindestens eine Fehlergröße (26) einen zugehörigen Fehlerschwellenwert (28) überschreitet,
**dadurch gekennzeichnet, dass** in einem zusätzlichen Schritt mindestens ein auf mindestens einer Fehlergröße (26) basierendes Korrektursignal (36) ermittelt wird, falls ein Fehlzustand festgestellt wurde, wobei unter Korrektursignal mindestens ein Signal zum Ansteuern und/oder Einstellen des Betriebes von mindestens einer Komponente des Heizsystems und/oder der Klimaanlage zu verstehen ist, und,
dass in einem zusätzlichen Schritt Betriebsparameter (40), basierend auf mindestens einer Fehlergröße (26), in der Steuereinheit (14) in einem Speicher (42) abgespeichert werden, welches die gezielte Regelung des Heizsystems und/ oder der Klimaanlage erlaubt um dem Fehlzustand entgegenwirken.

2. Verfahren (10) zur Detektion von Fehlzuständen nach Anspruch 1, **dadurch gekennzeichnet, dass** in einem zusätzlichen Schritt mindestens eine Fehlermeldung (33) ausgegeben wird, falls ein Fehlzustand festgestellt wird.

3. Verfahren (10) zur Detektion von Fehlzuständen nach einem der vorhergehenden Ansprüche, **dadurch gekennzeichnet, dass** die mindestens eine Fehlergröße (26) von einem Maß für die Abweichung von dem mindestens einen Sensorsignal (22) von einer zugehörigen Sollsignalvorgabe (48) abgeleitet wird.

4. Steuereinheit (14) für ein Heizsystem (12) und/oder für eine Klimaanlage, die dafür eingerichtet ist, ein Verfahren (10) nach einem der vorhergehenden Ansprüche auszuführen.

5. Steuereinheit (14) für ein Heizsystem (12) und/oder für eine Klimaanlage nach Anspruch 4, **dadurch gekennzeichnet, dass** die Steuereinheit (14) oder Teile davon mobil ausgestaltet ist bzw. sind.

6. Steuereinheit (14) für ein Heizsystem (12) und/oder für eine Klimaanlage nach Anspruch 4 oder 5, **dadurch gekennzeichnet, dass** die Steuereinheit (14) mindestens eine Kommunikationsverbindung (60), bevorzugt eine drahtlose Kommunikationsverbindung (60), zwischen den Teilen der Steuereinheit (14), bevorzugt zwischen den mobilen und nicht mobilen Teilen der Steuereinheit, (14) aufweist.

7. Heizsystem (12) und/oder Klimaanlage, insbesondere ein HVAC System, mit einer Steuereinheit (14) nach einem der Ansprüche 4 bis 6.

8. Heizsystem (12) und/oder Klimaanlage nach Anspruch 7, **dadurch gekennzeichnet, dass** das Heizsystem (12) und/oder die Klimaanlage eine für die Steuereinheit (14) oder für Teile der Steuereinheit (14) vorgesehene Aufnahme (64) aufweist.

9. Heizsystem (12) und/oder Klimaanlage nach einem der Ansprüche 7 oder 8, **dadurch gekennzeichnet, dass** das Heizsystem (12) und/oder die Klimaanlage mindestens eine Pumpe (54), ein Gebläse (44), eine Heizzelle (68), ein Gehäuse (70), ein Ventil (52), eine Leitung (50) oder eine Steuereinheit (14) aufweist und mindestens eine dieser Komponenten mindestens einen Beschleunigungssensor (16) und/oder ein Mikrophon (18) aufweist.

10. Computerprogramm, umfassend Befehle, die bei der Ausführung des Programms durch einen Computer, insbesondere durch eine mobile Recheneinheit, diesen veranlassen, die Steuereinheit nach einem der Ansprüche 4 bis 6 zu veranlassen, das Verfahren (10) nach einem der Ansprüche 1 bis 3 auszuführen.

11. Computerlesbarer Datenträger, auf dem das Computerprogramm nach Anspruch 10 gespeichert ist.

## Claims

1. Method (10) for detecting faults in a heating system (12) and/or in an air conditioning system, in particular in an HVAC system, having a control unit (14) having at least one acceleration sensor (16) and/or at least one microphone (18), which method comprises the following steps:
• ascertaining at least one sensor signal (22) using the at least one acceleration sensor (16) and/or using the at least one microphone (18),
• ascertaining at least one fault variable (26) on the basis of the at least one sensor signal (22),
• identifying a fault if the at least one fault variable (26) exceeds an associated fault threshold value (28),
**characterized in that**, in an additional step, at least one correction signal (36) based on at least one fault variable (26) is ascertained if a fault was identified, wherein a correction signal is understood to mean at least one signal for controlling and/or adjusting the operation of at least one component of the heating system and/or of the air conditioning system, and **in that**, in an additional step, operating parameters (40) based on at least one fault variable (26) are stored in a memory (42) in the control unit (14), this allowing targeted control of the heating system and/or of the air conditioning system in order to counteract the fault.

2. Method (10) for detecting faults according to Claim 1, **characterized in that**, in an additional step, at least one fault message (33) is output if a fault is identified.

3. Method (10) for detecting faults according to either of the preceding claims, **characterized in that** the at least one fault variable (26) is derived from a measure of the deviation of the at least one sensor signal (22) from an associated setpoint signal specification (48).

4. Control unit (14) for a heating system (12) and/or for an air conditioning system, which control unit is configured to perform a method (10) according to one of the preceding claims.

5. Control unit (14) for a heating system (12) and/or for an air conditioning system according to Claim 4, **characterized in that** the control unit (14) or parts thereof has or have a mobile configuration.

6. Control unit (14) for a heating system (12) and/or for an air conditioning system according to Claim 4 or 5, **characterized in that** the control unit (14) has at least one communication connection (60), preferably a wireless communication connection (60), between the parts of the control unit (14), preferably between the mobile and nonmobile parts of the control unit (14).

7. Heating system (12) and/or air conditioning system, in particular an HVAC system, having a control unit (14) according to one of Claims 4 to 6.

8. Heating system (12) and/or air conditioning system according to Claim 7, **characterized in that** the heating system (12) and/or the air conditioning system have/has a receptacle (64) provided for the control unit (14) or for parts of the control unit (14).

9. Heating system (12) and/or air conditioning system according to either of Claims 7 and 8, **characterized in that** the heating system (12) and/or the air conditioning system have/has at least one pump (54), a fan (44), a heating cell (68), a housing (70), a valve (52), a pipe (50) or a control unit (14) and at least one of these components has at least one acceleration sensor (16) and/or one microphone (18).

10. Computer program comprising commands which, when the program is executed by a computer, in particular by a mobile computing unit, cause the latter to cause the control unit according to one of Claims 4 to 6 to perform the method (10) according to one of Claims 1 to 3.

11. Computer-readable data carrier on which the computer program according to Claim 10 is stored.

## Revendications

1. Procédé (10) de détection d'états de dysfonctionnement dans un système de chauffage (12) et/ou dans une installation de climatisation, en particulier dans un système HVAC, à l'aide d'une unité de commande (14) pourvue d'au moins un capteur d'accélération (16) et/ou d'au moins un microphone (18), ledit procédé comprenant les étapes suivantes :
• déterminer au moins un signal de capteur (22) par le biais d'au moins un capteur d'accélération (16) et/ou d'au moins un microphone (18),
• déterminer au moins une grandeur de dysfonctionnement (26) sur la base de l'au moins un signal de capteur (22),
• définir un état de dysfonctionnement si l'au moins une grandeur de dysfonctionnement (26) devient supérieure à une valeur seuil de dysfonctionnement associée (28),
**caractérisé en ce que**, dans une étape supplémentaire, au moins un signal de correction (36) basé sur au moins une grandeur de dysfonctionnement (26) est déterminé si un état de dysfonctionnement a été défini, un signal de correction étant compris comme signifiant au moins un signal destiné à commander et/ou régler le fonctionnement d'au moins un composant du système de chauffage et/ou de l'installation de climatisation, et **en ce que**, dans une étape supplémentaire, des paramètres de fonctionnement (40), basés sur au moins une grandeur de dysfonctionnement (26), sont mémorisés dans une mémoire (42) de l'unité de commande (14), ce qui permet de réguler de manière ciblée le système de chauffage et/ou l'installation de climatisation afin de s'opposer à l'état de dysfonctionnement.

2. Procédé (10) de détection d'états de dysfonctionnement selon la revendication 1, **caractérisé en ce que**, dans une étape supplémentaire, au moins un message de dysfonctionnement (33) est délivré si un état de dysfonctionnement est détecté.

3. Procédé (10) de détection d'états de dysfonctionnement selon l'une des revendications précédentes, **caractérisé en ce que** l'au moins une grandeur de dysfonctionnement (26) est déduite d'une mesure de l'écart entre l'au moins un signal de capteur (22) et une spécification de signal cible associée (48) .

4. Unité de commande (14) destinée à un système de chauffage (12) et/ou une installation de climatisation, qui est conçue pour mettre en œuvre un procédé (10) selon l'une des revendications précédentes.

5. Unité de commande (14) destinée à un système de chauffage (12) et/ou une installation de climatisation selon la revendication 4, **caractérisée en ce que** l'unité de commande (14) ou des parties de celle-ci est/sont conçue(s) pour être mobile(s).

6. Unité de commande (14) destinée un système de chauffage (12) et/ou une installation de climatisation selon la revendication 4 ou 5, **caractérisée en ce que** l'unité de commande (14) comporte au moins une liaison de communication (60), de préférence une liaison de communication sans fil (60), entre les parties de l'unité de commande (14), de préférence entre les parties mobiles et non mobiles de l'unité de commande (14) .

7. Système de chauffage (12) et/ou installation de climatisation, notamment un système HVAC, comprenant une unité de commande (14) selon l'une des revendications 4 à 6.

8. Système de chauffage (12) et/ou installation de climatisation selon la revendication 7, **caractérisés en ce que** le système de chauffage (12) et/ou l'installation de climatisation comportent un logement (64) prévu pour l'unité de commande (14) ou des parties de l'unité de commande (14).

9. Système de chauffage (12) et/ou installation de climatisation selon l'une des revendications 7 ou 8, **caractérisés en ce que** le système de chauffage (12) et/ou l'installation de climatisation comportent au moins une pompe (54), une soufflante (44), une cellule de chauffage (68), un boîtier (70), une vanne (52), une conduite (50) ou une unité de commande (14) et l'un au moins de ces composants comporte au moins un capteur d'accélération (16) et/ou un microphone (18).

10. Logiciel comprenant des instructions qui, lorsque le logiciel est exécuté par un ordinateur, notamment par une unité informatique mobile, ordonnent à celui-ci d'ordonner à l'unité de commande selon l'une des revendications 4 à 6 de mettre en œuvre le procédé (10) selon l'une des revendications 1 à 3.

11. Support de données lisible par ordinateur sur lequel est mémorisé le logiciel selon la revendication 10.
